(19) Europäisches Patentamt
European Patent Office
Office européen des brevets

(11) **EP 4 239 531 A1**

(12) **EUROPEAN PATENT APPLICATION**

(43) Date of publication:
**06.09.2023  Bulletin 2023/36**

(21) Application number: **22382198.4**

(22) Date of filing: **03.03.2022**

(51) International Patent Classification (IPC):
**G06N 3/063** $^{(2023.01)}$     **G06N 3/04** $^{(2023.01)}$
**G06N 3/08** $^{(2023.01)}$

(52) Cooperative Patent Classification (CPC):
**G06N 3/063; G06N 3/047;** G06N 3/082;
G06N 3/084

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universitat de les Illes Balears**
**07122 Palma de Mallorca (ES)**

(72) Inventors:
• ROSELLÓ SANZ, José Luis
  07122 PALMA DE MALLORCA (ES)
• FONT ROSSELLÓ, Joan
  07122 PALMA DE MALLORCA (ES)
• FRANCO FRASSER, Christian Camilo
  07122 PALMA (ES)
• CANALS GUINAND, Vicente José
  07122 PALMA (ES)
• ROCA ADROVER, Miquel
  07122 PALMA (ES)
• SKIBINSKY GITLIN, Erik Sebastian
  07122 PALMA (ES)
• MORAN COSTOYA, Alejandro
  07122 PALMA (ES)

(74) Representative: **ZBM Patents - Zea, Barlocci & Markvardsen**
**Rambla Catalunya, 123**
**08008 Barcelona (ES)**

(54) **METHOD AND ELECTRONIC SYSTEM FOR INFERRING A MORPHOLOGICAL NEURAL NETWORK**

(57)    Method and electronic system for inferring of a Morphological Neural Network (MNN), based on inference data including an input data vector, wherein the MNN comprises at least one morphological hidden layer and an output linear layer, a first matrix of neuron weights associated with the morphological hidden layer, and a second matrix of neuron weights associated with the output linear layer.

FIG.2B

EP 4 239 531 A1

**Description**

The present disclosure relates to a method and an electronic system for inferring a Morphological Neural Network based on inference data including an input data vector.

BACKGROUND

Artificial Neural Networks (ANN) are widely used as an easy and generic way to implement solutions for digital signal processing and analysis. Such networks obtain their outputs as a combination of a cooperative operation of individual neurons, each neuron comprising a linear filtering process followed by a non-linear activation function. However, alternative Networks to classic Artificial Neural Networks have been developed using a set of mathematical operations (as those based on the use of tropical algebra rules), simpler than those used by classic ANNs.

One such alternative is Morphological Neural Networks (MNN). These networks are a type of ANN wherein each neuron can identify a range of values of the input data by using a set of lower and an upper boundaries to the regions of interest. These sets of boundaries are defined by the weights of each morphological neuron, in the form of morphological filters (i.e., each implemented by a morphological neuron, as opposed to classic ANN filters which are implemented by a classical artificial neuron). Morphological filters (i.e., morphological neurons) use maximum and minimum operations, without using the complex non-linear activation functions associated to classical ANNs.

Furthermore, MNNs are characterized by defining their outputs as a combination of orthogonal hyperplanes, which is a more complex definition than the simpler hyperplanes defined by classical ANNs. Therefore, by virtue of such hyperplanes and assuming the same number of neurons per network, MNNs can classify the input data into a larger number of regions than classical ANNs can.

An example of a software architecture developed for morphological networks (F. Arce, E. Zamora, H. Sossa, R. Barrón, 2016) consists of a network comprising two layers: a first hidden layer formed by complementary morphological neurons each defining the boundaries of a different range of values of the input data of the network, and a second layer comprising morphological neurons followed by a non-linear activation function. The second layer has the function of identifying the class to which the input data belongs to. In said example, each neuron performs the following operation:

$$y_j = \oplus'\left(\oplus'^{Q}_{i=1}\{x_i + \omega_{ij}\}, \oplus'^{Q}_{i=1}\{-x_i + v_{ij}\}\right)$$

That is, determining the minimum (denoted with operator $\oplus'$) between two previously obtained minima. In the equation, $y_j$ for j={1..K} is the output of the j-th neuron, and $x_i$ for i={1..Q} is the i-th attribute of each of the Q-dimensional inputs which form the input data database (i.e., inputs of the network) to be classified. For the estimation of weights $\omega_{ij}$ and $v_{ij}$ heuristic methods are normally followed, in contrast to the way in which classical ANNs are trained by using the most powerful algorithm currently used: the gradient descent backpropagation.

Recent advances in morphological networks tend to combine morphological layers (i.e., a set of morphological neurons) with conventional ones (i.e., a set of classical artificial neurons). Such networks may be defined as hybrid morphological-classical neural networks. Said advances claim that a network consisting of a set of combined morphological layers and classical artificial linear neuron layers can approximate any smooth function. Furthermore, its approximation error will be all the smaller the greater the number of neurons (both classical and morphological), which act as extractors of the input attributes.

Morphological networks use the principles of Tropical Algebra to implement at least one morphological layer. Such layer implements the maximum (or minimum) of additions instead of the sum of products. As a result, the nature of each morphological layer computation is nonlinear. This in contrast to the classical ANN scheme in which the nonlinearity is local to each artificial neuron, and not a global non-linear operation associated to a single layer (as is the case of the morphological layer).

Therefore, the properties of morphological neural networks are structurally different than those of classical neural network models. In addition, it is possible for a hybrid morphological-classical neural network to be trained by using the same type of algorithms as the gradient descent backpropagation.

The software implementation of such hybrid morphological-classical neural networks requires a high computational cost from a controller. This becomes a significant drawback when such neural networks are used within edge computing devices.

Edge Computing may be defined as all the data processing that is performed in the edge of any network, i.e., nearby the physical data collection point in the real world. Generally, when machine learning is needed to be applied to said data, there are two possible strategies: sending the data from an edge device to a cloud (or server) where the AI processing is implemented; or performing the AI processing within an edge device, and then send the output data to the cloud.

If an edge device has to send the data to be processed by a neural network to a cloud or server, it requires a strong data connection (such as a standard cable Internet connection or wifi connection) and enough upstream and downstream band to send and receive such data. This may be difficult because of the usual high weight of the data used in such cases (for example, in image recognition systems, wherein sending images with proper resolution uses a lot of bandwidth). Furthermore, edge devices may require a high energy consumption to send and receive such amounts of big data.

Therefore, there is a need for a hybrid morphological neural network implementation which can be used within edge computing devices without a high computation cost and energy consumption, and with an acceptable performance.

Despite the progress that has been made in terms of morphological architectures, no application-specific circuitry implementations of such morphological hybrid neural networks have been implemented to this date.

SUMMARY

According to a first aspect, a method of inferring of a Morphological Neural Network (MNN) is presented, the method being performed by an electronic system, based on inference data including an input data vector, wherein the MNN comprises at least one morphological hidden layer and an output linear layer, a first matrix of neuron weights associated with the morphological hidden layer, and a second matrix of neuron weights associated with the output linear layer, and wherein the method comprises the steps of:

a. Generating a matrix of addition components, wherein the components of the matrix of addition components are the result of performing a vector-matrix addition between the input data vector and the first matrix of neuron weights, and wherein the vector-matrix addition is performed by using an array of binary digital adders of the electronic system;
b. Temporally encoding the components of the matrix of addition components;
c. Selecting, for each row of the temporally encoded matrix of addition components, a maximum or minimum value among the components of the row, wherein:

i. If a maximum value is selected, the selection is performed using a plurality of OR logic gates of the electronic system; and
ii. If a minimum value is selected, the selection is performed using a plurality of AND logic gates of the electronic system;

d. Generating a vector of outputs of the hidden layer, wherein each component of the vector of outputs of the hidden layer is the selected maximum or minimum of the same row of the matrix of addition components as the row of said component within the vector of outputs of the hidden layer;
e. Generating a matrix of multiplying components, wherein the components of the matrix of multiplying components are the result of performing a vector-matrix product between the vector of outputs of the hidden layer and the second matrix of neuron weights, and wherein the vector-matrix product is performed by using an array of multiplying logic gates of the electronic system;
f. Generating an output data vector for the neural network, wherein each component of the output data vector is the sum of the components of each row of the matrix of multiplying components, and wherein the sum is performed by using an accumulated parallel counter of the electronic system.

The input data vector may be defined as the input data to be processed by the MNN Network to infer an output. Furthermore, the input data vector may be codified in binary, and can be taken directly from the sensors (input sensed signals) of the network or be the result of a pre-processing of the input sensed signals.

Classically, a binary number is defined by using a set of N-bits, each one with a weight related to 2 powered to the relative position of the bit inside the bit-stream. Two possible widely used binary codification may be defined: signed binary and unsigned binary. In the signed binary codification, an N-bit number can represent a number between $-2^{N-1}$ and $2^{N-1}-1$ . This codification is also known as of two-complement. On the other hand, in unsigned binary codification, an N-bit number can represent a number between 0 and $2^N-1$. However, unsigned codification does not allow defining negative numbers. Therefore, the input data vector may use either of said binary codifications.

Furthermore, the first matrix of neuron weights associated with the hidden layer may be defined as the connectivity matrix of weights from the input of the network (where the input data vector is inputted) to the morphological hidden layer of the network, corresponding to all the morphological neurons of the hidden layer.

The number of neurons of the morphological hidden layer can be selected during the training stage of the network, in order to achieve the best fitting for the purpose of the neural network. Furthermore, the number of neurons of the output linear layer is determined by the purpose of the network itself (i.e., the number of categories outputted by the neural network).

The second matrix of neuron weights associated with the output linear layer may be defined as the connectivity matrix of weights from the morphological hidden layer to the output linear layer of the network itself. In case that the MNN network comprises more than one hidden layer, the penultimate layer of the network would be a morphological hidden layer, and the last layer of the network would be an output linear layer, and thus, the second matrix of neuron weights would be the connectivity matrix of weights from the output of the last morphological hidden layer within the network to the output linear layer of the MNN network. The function of the second matrix is to perform a simple linear transformation.

The matrix of addition components may be an intermediate matrix, calculated by performing a vector-matrix addition between the input data vector and the first matrix of neuron weights.

As an example, the following mathematical notation used in the rest of the present disclosure may be defined. More specifically, a generic matrix A with M rows and N columns and vector $\vec{b}$ with N components. A vector-matrix operation may be defined as follows:

$$\vec{b} \circ A = b_j(op)a_{ij} = \begin{pmatrix} b_1(op)a_{11} & \cdots & b_N(op)a_{1N} \\ \vdots & \ddots & \vdots \\ b_1(op)a_{M1} & \cdots & b_N(op)a_{MN} \end{pmatrix} \quad (1)$$

By performing such vector-matrix operation, a resulting matrix may be generated by operating a vector and a matrix. In the above depicted equation, a generic operation "(op)" is defined. From equation (1) a vector-matrix addition may be defined by equation (2) as:

$$\vec{b} \oplus A = b_j + a_{ij} = \begin{pmatrix} b_1 + a_{11} & \cdots & b_N + a_{1N} \\ \vdots & \ddots & \vdots \\ b_1 + a_{M1} & \cdots & b_N + a_{MN} \end{pmatrix} \quad (2)$$

Similarly, a vector-matrix product may be defined as:

$$\vec{b} \odot A = b_j \cdot a_{ij} = \begin{pmatrix} b_1 \cdot a_{11} & \cdots & b_N \cdot a_{1N} \\ \vdots & \ddots & \vdots \\ b_1 \cdot a_{M1} & \cdots & b_N \cdot a_{MN} \end{pmatrix} \quad (3)$$

Over any matrix A, the operators maximum or minimum component of a row ($M_r$ and $m_r$) may be defined as follows:

$$M_r A = M_r \begin{pmatrix} a_{11} & \cdots & a_{1N} \\ \vdots & \ddots & \vdots \\ a_{M1} & \cdots & a_{MN} \end{pmatrix} = \begin{pmatrix} max(a_{11}, a_{12}, \dots, a_{1N}) \\ \vdots \\ max(a_{M1}, a_{M2}, \dots, a_{MN}) \end{pmatrix} \quad (4)$$

$$m_r A = m_r \begin{pmatrix} a_{11} & \cdots & a_{1N} \\ \vdots & \ddots & \vdots \\ a_{M1} & \cdots & a_{MN} \end{pmatrix} = \begin{pmatrix} min(a_{11}, a_{12}, \dots, a_{1N}) \\ \vdots \\ min(a_{M1}, a_{M2}, \dots, a_{MN}) \end{pmatrix} \quad (5)$$

Finally, a sum over rows may be defined as:

$$S_r A = S_r \begin{pmatrix} a_{11} & \cdots & a_{1N} \\ \vdots & \ddots & \vdots \\ a_{M1} & \cdots & a_{MN} \end{pmatrix} = \begin{pmatrix} a_{11} + a_{12} + \cdots + a_{1N} \\ \vdots \\ a_{M1} + a_{M2} + \cdots + a_{MN} \end{pmatrix} \quad (6)$$

Both vector-matrix operations, along with operators $M_r$, $m_r$ and $S_r$ may be used below.

Regarding the steps of the method of inferring of a MNN, in step a, the vector-matrix addition between the input data vector (x) and the first matrix of neuron weights may be performed by using an array of binary digital adders of the electronic system.

Furthermore, in step b, the components outputted by the array of binary digital adders, which are the result of the vector-matrix addition performed in step a, are further encoded in a temporal signal.

Many temporal coding possibilities exist. According to a common example, a temporal coding uses a single bit which oscillates along time and, wherein the codified value depends on the frequency of the oscillation of the single bit between the high and the low bit states.

According to a specific example, the temporal encoding may be performed by comparing each component of the matrix of addition components with a counter signal, using an array of digital comparators of the electronic system.

The counter signal may be, for example, a continuous counter signal. That is, it may be a signal which counts correlative values. This signal can also be, for example, cyclical, i.e., it can count from a first value to a last value, and then start back on the first value.

Alternatively, the counter signal may be a random signal. That is, it may be a signal which delivers a series of random values. This signal can also be, for example, cyclical, i.e., it can count from a first value to a last value (wherein the values are not correlatives), and then start back on the first value, thus being considered "pseudo random". A random or pseudo random signal is used in encoding styles such as stochastic computing encoding.

According to an example, the array of multiplying logic gates may comprise at least one XNOR logic gate.

Furthermore, according to another example, the array of multiplying logic gates may comprise at least one AND logic gate.

When multiplying two quantities using a temporal codification such as, for example, a stochastic bipolar or unipolar codification, the gates needed to perform such operation may be the XNOR gate or the AND gate respectively. Depending on which type of temporal codification is used, the multiplying logic gate may comprise one or more XNOR gates or one or more AND gates.

More precisely, according to another example, the encoding of each component of the matrix of addition components into a temporal signal may be performed in several ways:

- By inputting each component of the matrix of addition components, which may be encoded in binary, into an array of digital comparators, and comparing it to a reference continuous counter signal.
- By inputting each component of the matrix of addition components, which may be encoded in binary, into an array of digital comparators, and comparing it to a reference random counter signal.

A digital comparator or magnitude comparator is a hardware electronic device that takes two numbers as input in binary form and determines whether one number is greater than, less than or equal to the other number according to a specific codification (one of the most widely used in 2-complement). Comparators are widely used in central processing units (CPUs) and microcontrollers (MCUs). Examples of digital comparator may comprise digital designs like the ones used for the CMOS 4063 and 4585 or the TTL 7485 and 74682.

To temporally encode each signal (each binary value of each component of the matrix of addition components), both the input signal to be encoded and the reference counter signal are inputted in a digital comparator, where the reference counter signal changes its binary value over a series of values. This way, when the signal to be encoded is greater than the reference counter signal, a high output (for example, a first output binary signal being equal to 1) is outputted by the comparator. Otherwise, the output of the comparator will be a low value (output binary signal being equal to 0).

According to specific examples of the present disclosure, the reference counter signal may be a continuous counter signal (i.e., a cyclical counter), thus resulting in a signal at the output of the comparator which has two continuous states (either one and changing to zero, or zero and changing to one). Such encoding could be defined as a two-state temporal encoding.

Alternatively, the reference counter signal may also be a random or pseudo-random clock signal. Such signal may be obtained from, for example, a linear-feedback shift register (LFSR). Such module is a shift register whose input bit is a linear function of its previous state.

In this specific example, the initial value of the LFSR may be called the seed, and because the operation of the register is deterministic, the stream of values produced by the register is completely determined by its current (or previous) state. Likewise, because the register has a finite number of possible states, it must eventually enter a repeating cycle. However, an LFSR with a well-chosen feedback function can produce a sequence of bits that appears random and has a very long cycle.

General applications of LFSRs may include generating pseudo-random numbers, pseudo-noise sequences, fast digital counters, and whitening sequences. Both hardware and software implementations of LFSRs are common.

Therefore, the resulting signal of using a random or pseudo random number signal (generated by an LFSR or other digital pseudo-random number generators such as a Sobol Sequence Generator) may be a stochastic temporal encoded signal. More specifically, stochastic temporal encoding may be defined as a type of encoding wherein information is represented and processed in the form of digitized probabilities. Stochastic computing (SC) was proposed in the 1960s as a low-cost alternative to the architecture of Von Neumann. However, because of its intrinsically random nature, a resulting lower accuracy discouraged its use in digital computing. However, when used within the hardware implementation of the inferring process of an MNN, it may be useful it substantially reduces the amount of hardware needed to perform the inference. This dramatic decrease in hardware comes with a decrease of accuracy and computing speed, which is acceptable for most applications of such neural networks as pattern recognition networks, wherein the neural networks are systems that may not need a very high accuracy in all its intermediate processing steps to provide an accurate pattern recognition response.

As previously described, an example of a temporal coding uses a single bit which oscillates along time and, the codified value depending on the frequency of the oscillation of the single bit between the high and the low bit states. Regarding the specific example of the temporal encoding being a stochastic temporal encoding, in which this oscillation is following an apparently random pattern, the two most widely used codifications are the unipolar and the bipolar codes.

Unipolar codification may be performed by adding all the high binary values of a signal during time, and dividing the result quantity by the total number of high and low values. Therefore, in unipolar type stochastic encoding, the number codified is directly the probability of having a high value in the bit signal. Coded numbers are bounded between 0 and 1, and have the disadvantage of not including negative numbers.

On the other hand, bipolar codification may be performed by adding all the high values and subtracting from this quantity the number of low values, the result of this subtraction is divided by the total number of zeroes and ones. For the case of bipolar, the possible values are bounded between -1 and 1.

After temporally encoding the components of the matrix of addition components (for example, either with a two-state temporal encoding or a stochastic temporal encoding), a step c is performed wherein the maximum or minimum value among the components of each row of the matrix of addition components is selected (previously denoted in generical equations (4) and (5) by operators $M_r$ and $m_r$ respectively). Furthermore, a vector of outputs of the hidden layer is generated from said selection.

More precisely, the vector of outputs of the hidden layer is generated by selecting, for each row within the matrix of addition components, the maximum or minimum component of the row, and placing it in the same row of the vector of outputs as the row of the matrix of addition components from which it has been calculated.

The selection, for each row of the matrix of addition components, of a maximum or minimum value among the components of the row, is performed in the following way:

    i. If a maximum value is selected, the selection is performed using a plurality of OR logic gates of the electronic system; and
    ii. If a minimum value is selected, the selection is performed using a plurality of AND logic gates of the electronic system;

More precisely, all the components in each row of the matrix of addition components are inputted in a corresponding logic gate, to obtain at the output of the logic gate the desired maximum or minimum value within said row.

The maximum or the minimum between values of two different temporally encoded signals can be obtained by using OR and AND gates respectively. This is possible when all the signals involved in the operation are correlated. This correlation is obtained when the same counter is used while decoding each number from classical binary notation (unsigned or signed) to a temporal codification. The coherence between the switching of all the signals involved implies that an OR gate selects the signal that is switching the most (the maximum) and that an AND gate selects the signal that is switching the less.

Therefore, by performing steps a to d, a resulting vector of outputs of the hidden layer is inferred through the morphological hidden layer, with an input of the network (i.e., the input data vector).

Afterwards, step e is performed, wherein a matrix of multiplying components is generated by performing the vector-matrix product of the vector of outputs of the hidden layer with the second matrix of neuron weights.

Therefore, in step e, the vector-matrix product between the vector of outputs of the hidden layer and the second matrix of neuron weights may be performed by using an array of multiplying logic gates of the electronic system. Such array of multiplying logic gates may comprise one or more XNOR logic gates and/or AND logic gates of the electronic system.

Finally, in step f, an output data vector for the neural network is generated, by performing a sum over the rows (previously denoted in generical equation (6) by operator $S_r$) of the matrix of multiplying components.

Therefore, each component of the same row within the matrix of multiplying components is inputted in an Accumulated Parallel Counter (APC), to have, for each row, the sum of all the corresponding components of said row. That is, a sum over rows is performed over the matrix of multiplying components. The result of such sum over rows is a vector of one column with a number of components being equal to the number of rows of the matrix of multiplying components. Such resulting vector is defined as the output data vector.

The output data vector may be considered as the output of the Neural Network, which may be interpreted a set of categories in which the input is classified. The number of possible outputs of the neural network corresponds to the number of rows the output data vector has.

Consequently, the hardware implementation of a MNN network according to the present disclosure allows to use digital binary adders along with maxima and minima operating modules (using OR and AND logic gate arrays) instead of a microcontroller (wherein the network may be programmed). Furthermore, the use of the temporal codification allows merging both layers (morphological and classical linear layers) in a highly compact way (i.e., there is no encoding or decoding of the data in between layers of the MNN network), thus reducing the energy consumed by the inferring of the network, and the complexity of the hardware used to implement the network.

Furthermore, by choosing a hardware implementation of an MNN network according to the present disclosure, instead of a hardware implementation of other ANN networks, the hardware resources used may be considerably reduced since in the network according to the present disclosure there is no need to implement any non-linear activation function for each neuron, with the associated saving in terms of hardware and energy resources.

Also, when an edge computing device performs the AI processing (i.e. infers a neural network according to the present disclosure) within itself, and sends the output data to the cloud, a small quantity of information is needed to be sent from node to server, thus minimizing the energy consumption considerably. This is because the data transmission is highly costly in terms of energy consumption of an edge device. In this sense, the low-power AI hardware implementation according to the present disclosure minimizes the processing steps in the AI-modules, thus increasing the battery lifetime of battery-powered devices.

More precisely, the use of the method of the present disclosure may minimize the cost of inferring data in an MNN neural network by means of an electronics system, (such as, for example, a Field Programmable Gate Array (FPGA) or an Application Specific Integrated Circuit, ASIC), thus avoiding high-cost digital blocks. Such high-cost digital blocks may usually be implemented by large numbers of logic gates, such as, for example, digital multipliers. Furthermore, the implementation of costly non-linear functions is also avoided, such as the hyperbolic tangent or the sigmoidal functions. As a result, it is possible to avoid the use of hardware-consuming digital blocks.

According to another example of the present disclosure, step e of the method of inferring of a Morphological Neural Network may further comprise temporally encoding the components of the second matrix of neuron weights, the encoding being performed by comparing each component of the second matrix of neuron weights with a second counter signal, using a second digital comparison module of the electronic system.

Therefore, the operations between outputs of one layer and inputs of the subsequent layer do not require coding and decoding in between them, resulting in a more compact (i.e., less hardware consuming) implementation. More specifically, the operations of the selection of minimum or maximum and the generation matrix of multiplying components are linked with no codification or decodification between them, thus compacting the hardware used to implement them, and decreasing the computation time.

According to a specific example, the first counter signal and the second counter signal are statistically decorrelated.

This is because both signals (the outputs of the hidden morphological layers and the multiplying weights from the second matrix of neuron weights), which are codified in the temporal domain, are combined with multiplying gates to generate the matrix of multiplying components. In this case, the time-domain signals have to be temporally uncorrelated (and therefore have to be generated by different counters) in order to provide the product at the output of the array of multiplying logic gates.

Furthermore, the second counter signal may be a continuous counter signal or a random signal if a stochastic codification is used. Regarding the stochastic option, if a bipolar codification is selected, the multiplying logic gates used to implement the product may be XNOR gates. Otherwise, if a unipolar codification is used, the multiplying logic gates to be used may be AND gates.

According to another example of the present disclosure, the method of inferring of a Morphological Neural Network may further comprise generating two operating sub-matrices from the first matrix of neuron weights, each sub-matrix comprising a unique set of weights from the first matrix of neuron weights, and wherein:

- step a further comprises generating two matrices of addition components, each associated with a corresponding operating sub-matrix, and each being the result of performing a vector-matrix addition between the input data vector and the corresponding operating sub-matrix;
- step c further comprises, for each generated matrix of addition components, selecting a maximum and a minimum value among the elements of each respective row, wherein a maximum is selected for the rows of the first matrix of addition components, and a minimum is selected for the rows of the second matrix of addition components.
- step d further comprises generating two vectors of outputs of the hidden layer, wherein the components of each vector of outputs is the respective selected maximum or minimum of the same row of the respective matrix of addition components, as the row of said component within the vector of outputs, and step c further comprises a step of combining the two generated vectors of outputs of the hidden layer into a single vector of outputs of the hidden layer.

This way, by dividing the first matrix of neuron weights into two sub-sets of weights, each subset may be used to subsequently select a maximum and a minimum among its rows. By doing so, the non-linearity of the operations is enhanced, and the precision of the overall network increases significantly.

Another advantage of the use of morphological layers comprising both maximum and minimum operations may be that, when applying a classical back-propagation algorithm to the full network, it would naturally discard several morphological weights. That is, during the network's training, when lowering (or increasing) the sub-set of weights that are used to estimate the maximum (or the minimum) of each row of the matrix of addition components, some weights (and therefore some connections) could be discarded from the final hardware implementation since they may have no influence in the final value of said operations. This natural "pruning" of connections may be implemented by simply applying the gradient descend backpropagation algorithm.

According to another example, the network may comprise a plurality of hidden layers and a plurality of output linear layers, each hidden layer comprising a matrix of neuron weights associated with the hidden morphological layer, and each output linear layer comprising a matrix of neuron weights associated with the output linear layer, wherein each hidden layer is connected with a following output linear layer in an alternate way, the last output linear layer being the output linear layer of the network.

This way, a MNN network may be implemented wherein a plurality of morphological layers and linear layers alternate, resulting in an overall output of the neural network capable of dealing with complex problems, such as pattern recognition or regression problems. The overall accuracy provided by the present method is similar or even better than those obtained with classical ANN, while using a compact low-power digital system and also providing a natural way of connectivity pruning included when backpropagation is implemented to the full network, thus further reducing the overall area/power dissipation.

According to another aspect of the present disclosure, an electronic system for inferring of a Morphological Neural Network (MNN) is presented, the system using inference data including an input data vector. More precisely, the MNN comprises at least one morphological hidden layer and an output linear layer, a first matrix of neuron weights associated with the morphological hidden layer, and a second matrix of neuron weights associated with the output linear layer, and the system comprises:

- A first array of binary digital adders configured to generate a matrix of addition components, wherein the components of the matrix of addition components are the result of performing a vector-matrix addition between the input data vector and the first matrix of neuron weights.
- A temporal encoder configured to encode the components of the matrix of addition components;
- A selecting module, configured to select, for each row of the matrix of addition components, a maximum or minimum value among the components of the row;
- A vector generating module configured to generate a vector of outputs of the hidden layer, wherein each component of the vector of outputs of the hidden layer is the selected maximum or minimum of the same row of the matrix of addition components as the row of said component within the vector of outputs of the hidden layer;
- An array of multiplying logic gates configured to generate a matrix of multiplying components, wherein the components of the matrix of multiplying components are the result of performing a vector-matrix product between the vector of outputs of the hidden layer and the second matrix of neuron weights;
- An accumulated parallel counter configured to generate an output data vector for the neural network, wherein each component of the output data vector is the sum of the components of each row of the matrix of multiplying components.

The use of such electronic system, implemented in, for example, a Field Programmable Gate Array (FPGA) or an Application Specific Integrated Circuit (ASIC), may minimize the cost of inferring data in an MNN neural network, thus avoiding high-cost digital blocks. Such high-cost digital blocks may usually be implemented by large numbers of logic gates, such as, for example, digital multipliers. Furthermore, as previously noted, the implementation of costly non-linear functions is also avoided, such as the hyperbolic tangent or the sigmoidal functions. As a result, it is possible to avoid the use of hardware-consuming digital blocks.

In general, ANNs are highly dependent on the use of Multiply-and-accumulate (MAC) blocks, normally implemented using classical digital codifications like two-complement. However, by using the system according to the present disclosure, many MAC blocks may be substituted by add-and-maximize or add-and-minimize blocks which use a lower number of hardware resources. Also, temporal codification may merge morphological and linear layers in a highly compact way due to the use of the temporal codification for signals used therein.

According to another example, the temporal encoder may comprise an array of digital comparators configured to temporally encode the components of the matrix of addition components, and wherein the encoding is performed by comparing each component of the matrix of addition components with a counter signal.

This enables implementing subsequent maximum and minimum functions in a compact way, since those functions may be implemented with only a single logic gate in the temporal domain.

Furthermore, the electronic system may also comprise a linear-feedback shift register (LFSR) for generating a random counter signal. Using such register in place of other random-generating modules (such as software implemented modules) leads to significantly lower hardware cost and also provides a faster method of generating a non-repeating sequence.

Also, in another example, the selection module may comprises a plurality of OR logic gates, to select a maximum value. Furthermore, according to another example, the selection module may comprise a plurality of AND logic gates, to select a minimum value.

The maximum or the minimum between two different temporally-coded signals can be obtained by using OR or AND gates respectively. This may be the case when all the numbers to include in the operation are correlated. This correlation is obtained when the same counter is used where de-codifying each number from the classical binary notation (unsigned or signed) to the temporal one. The coherence between the switching of all the signals involved implies that an OR gate selects the signal that is switching the most (the maximum) and that an AND gate selects the signal that is switching the less.

Furthermore, the array of multiplying logic gates may also comprise a plurality of XNOR logic gates, and/or a plurality of AND logic gates.

When multiplying two quantities using a temporal codification as, for example, the stochastic bipolar or unipolar codification, the gates needed to perform such operation are the XNOR gate or the AND gate respectively.

BRIEF DESCRIPTION OF THE DRAWINGS

Non-limiting examples of the present disclosure will be described in the following, with reference to the appended drawings, in which:

Figure 1A shows a schematic representation of a morphological neural network according to a first example of the present disclosure;

Figure 1B shows a schematic representation of the electronic system for inferring a morphological neural network according to the first example of the present disclosure;

Figure 1C shows a schematic representation of the steps of the method of inferring a morphological neural network according to the first example of the present disclosure;

Figure 2A shows a schematic representation of a morphological neural network according to a second example of the present disclosure;

Figure 2B shows a schematic representation of the electronic system for inferring a morphological neural network according to the second example of the present disclosure;

Figure 2C shows a schematic representation of the steps of the method of inferring a morphological neural network according to the second example of the present disclosure;

Figure 3 shows a schematic representation of a morphological neural network according to a third example of the present disclosure.

DETAILED DESCRIPTION OF EXAMPLES

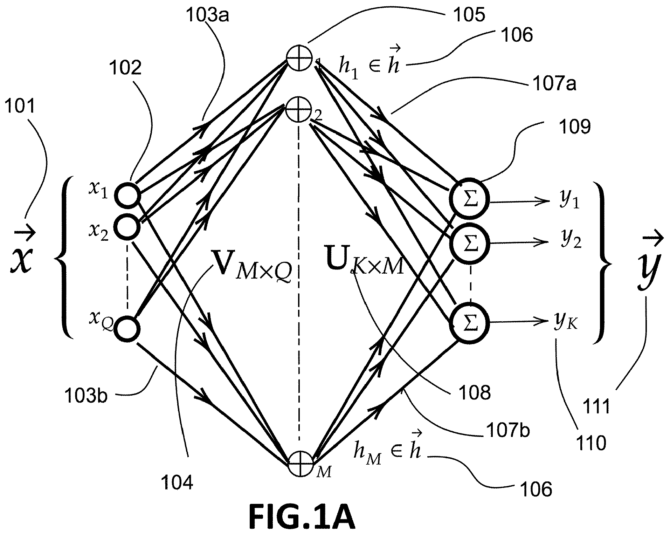

According to a first example of the present disclosure, a method, and an electronic system for inferring a morphological neural network are presented. More precisely, figure 1A shows a schematic representation of a morphological neural network (MNN) according to the first example of the present disclosure, which may be defined as a feedforward network comprising a morphological hidden layer 105, and an output linear layer 109. The MNN network further comprises a first matrix of neuron weights $V_{MxQ}$ 104 associated with the morphological hidden layer 105, and a second matrix of neuron weights $U_{KxM}$ 108 associated with the output linear layer 109.

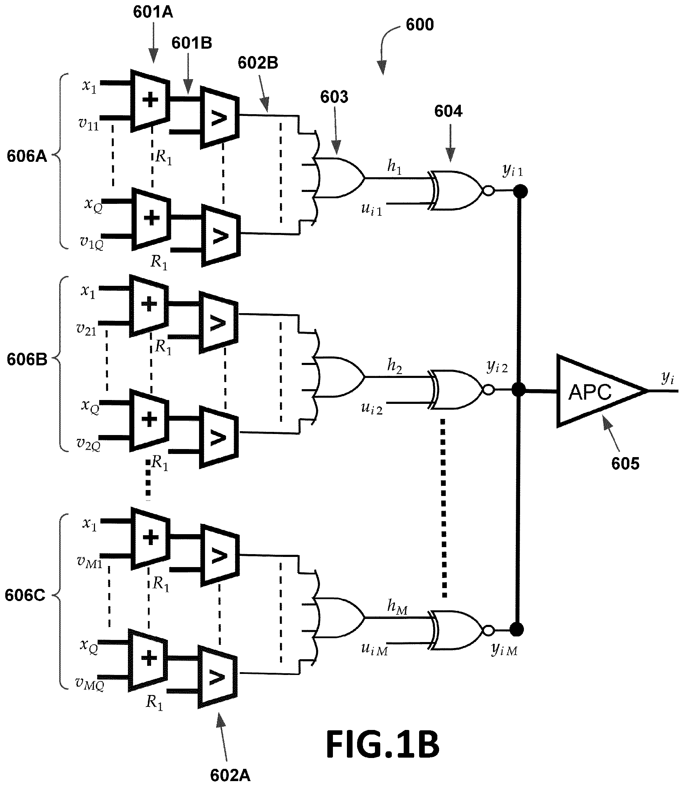

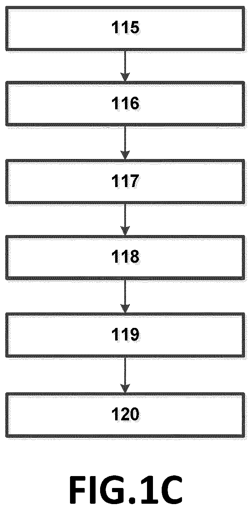

Furthermore, figure 1B shows a schematic representation of the electronic system for inferring a morphological neural network according to the first example of the present disclosure. Said electronic system is used to perform the method for inferring a morphological neural network according to the first example of the present disclosure. Also, figure 1C shows a schematic representation of the steps of the method of inferring a morphological neural network according to the first example of the present disclosure.

As seen in figure 1A, the MNN is inferred by introducing an input data vector $\vec{x}$ 101, with a plurality of inputs $x_1$ to $x_Q$ 102 to the MNN network, and generating the hidden layer 105 by operating it with the first matrix of neuron weights $V_{MxQ}$ 104) and, subsequently, operating the vector of outputs $\vec{h}$ 106 of the hidden layer 105 (the vector with components $h_1$ to $h_M$), with the second matrix of neuron weights $U_{KxM}$ 108 to generate the output linear layer 109. In this example, the hidden layer 105 comprises M neurons, and the output layer 109 comprises K neurons (in the form of accumulated parallel counter, APC), which is the number of classes in which the output of the layer classifies the input data inputted in the MNN network (thus outputting an output vector of the network $\vec{y}$ 111, with components $y_1$ to $y_K$ 110).

Furthermore, as seen in figure 1B, an electronic system used to perform the method of inferring of the MNN network depicted in figure 1A is presented. The electronic system 600 comprises an array of binary digital adders 601A, an array of digital comparators 602A, an array of OR logic gates 603, an array of XNOR logic gates 604, and an APC 605.

In the present example, as in the following examples, vectors are considered to be column vectors, although a change to row columns could be performed, thus transposing the matrices involved in the operations accordingly.

Furthermore, in the present example, parameter M may be the number of morphological neurons of the morphological hidden layer 105, and it may usually be selected during the training stage of the network, in order to achieve the best fitting for the purpose of the neural network, or the type of input data used thereof.

The MNN network of figure 1A is inferred by performing the method according to the first example of the present disclosure, as depicted on figure 1C, wherein the method comprises:

- Step 115 of generating a matrix of addition components H, wherein the components of the matrix of addition components H are the result of performing a vector-matrix addition between the input data vector $\vec{x}$ 101 and the first matrix of neuron weights $V_{MxQ}$ 104.

Thus, in step 115, the following equation is performed:

$$H = V_{M \times Q} \oplus \vec{x}_{Q \times 1} = \begin{pmatrix} v_{11} + x_1 & \cdots & v_{1Q} + x_Q \\ \vdots & \ddots & \vdots \\ v_{M1} + x_1 & \cdots & v_{MQ} + x_Q \end{pmatrix} \quad (A1)$$

Matrix H is an intermediate matrix wherein the input of the network, as defined by the input data vector $\vec{x}$ 101, is added to the first matrix of neuron weights $V_{MxQ}$ 104, which is the matrix of connectivity between the input layer (i.e., the input data vector $\vec{x}$ 101) and the hidden layer 105. Said addition is a vector-matrix addition (a previously defined operation), resulting in a matrix H of M by Q dimensions.

Said vector-matrix addition of step 115 is performed using the array of binary digital adders 601A of the electronic system. More precisely, the components ($x_1$ to $x_Q$) of the input data vector $\vec{x}$ 101 and the components of the first matrix of neuron weights $V_{MxQ}$ 104 are inputted in the inputs of the array 601A, in order to perform each sum as defined in equation (A1). Therefore, the outputs 601B of the array 601A comprise each sum, i.e., each component of the resulting matrix of addition components H. In order to show where each component of matrix H is obtained within the electronic system, in figure 1B each group of arrays involved in the calculation of each row of matrix H is marked differently. More precisely, 606A for the first row of H, 606B for the second row of H and, lastly, 606C for the last row of H. The corresponding outputs 601B of the binary digital adders corresponding to 606A, 606B and 606C correspond to the components of their corresponding row (first, second and last row respectively).

Afterwards, the following step is performed:

- Step 116 of temporally encoding the components of the matrix of addition components H, wherein the encoding is performed by comparing each component with a counter signal $R_1$, by using a digital comparison module of the electronic system;

Thus, in step 116, each output of the array of binary digital adders 601A is encoded by inputting it to an array of digital comparators 602A and comparing each output with a counter signal $R_1$ (as seen in figure 1B). In this example, the counter signal $R_1$ is a pseudo random signal which, when compared with each output 601B of the array of binary digital adders 601A, results in an output signal 602B of each comparator 602A being the corresponding signal 601B inputted in the comparator 602A. Furthermore, in this example, the pseudo random signal $R_1$ is generated by an LFSR device.

Afterwards, the following steps are performed:

- Step 117 of selecting, for each row of the matrix of addition components H, a maximum value among the components of the row; and
- Step 118 of generating a vector of outputs $\vec{h}$ 106 of the hidden layer 105, wherein each component of the vector of outputs $\vec{h}$ 106 is the selected maximum of the same row of the matrix of addition components H as the row of said component within the vector of outputs $\vec{h}$ 106.

Thus, in step 117, the following equation is performed:

$$\vec{h}_{M\times 1} = M_r(H) = M_r(V_{M\times Q} \oplus x) = \begin{pmatrix} max(v_{11} + x_1, \dots, v_{1Q} + x_Q) \\ \vdots \\ max(v_{M1} + x_1, \dots, v_{MQ} + x_Q) \end{pmatrix} \quad (\text{A2})$$

By performing steps 117 and 118, a vector of outputs $\vec{h}$ 106 is obtained, each component of the vector 106 being the output of the corresponding neuron (i.e., for each neuron i, a corresponding $h_i$ is obtained, for all M neurons). As seen in the previous equation (A2), and following the previously defined operation of selecting the maximum component of a row of a matrix ($M_r$), each component of vector $\vec{h}$ 106 is obtained by selecting, in this example, a maximum among the components of each row of the matrix of addition components H. Therefore, for row 1 of matrix H, the maximum value among all the elements of the row is selected, and placed in row 1 of the vector of outputs $\vec{h}$ 106. This is performed for each row of H, placing the maximum value of each row of the matrix H in the corresponding same row of the vector of outputs $\vec{h}$ 106, for all M components of the vector of outputs $\vec{h}$ 106 (and thus, generating an output for all M neurons of the hidden layer 105).

In the present example, in the electronic system (as seen in figure 1B), the selection of the maximum is performed by inputting each output 602B of each digital comparator 602A in an array of OR logic gates 603. More specifically, all the outputs 602B corresponding to the same row of matrix H (for example, all the outputs 602B within the group of signals 606A, which correspond to the first row of matrix H, or 606B, corresponding to the second row, etc.) are inputted in an OR logic gate. This way, each OR logic gate 603 outputs the maximum value among the values inputted in the gate. The output of each OR logic gate is the corresponding component $h_i$ (first component for the output of the OR corresponding to the first row of matrix H, second component for the OR corresponding to the second row of matrix H, etc... $h_1$, $h_2$, etc... in figure 1B) of the vector of outputs $\vec{h}$ 106.

Therefore, the vector of outputs $\vec{h}$ 106 is generated by gathering lines $h_1$, $h_2$, etc..., which are the components that form the vector of outputs $\vec{h}$ 106.

Once the outputs ($h_1$, $h_2$, etc...) of the hidden layer 105 of the network are generated, the following steps are performed:

- Step 119 of generating a matrix of multiplying components Y, wherein the components (107a to 107b) of the matrix of multiplying components Y are the result of performing a vector-matrix product between the vector of outputs $\overline{h}$ 106 and the second matrix of neuron weights $U_{KxM}$ 108.
- Step 120 of generating an output data vector $\vec{y}$ 111 for the neural network, wherein each component ($y_1$ to $y_K$ 110) of the output data vector $\vec{y}$ 111 is the sum 109 of the components of each row of the matrix of multiplying components Y.

By performing steps 119 and 120, the vector of outputs $\vec{h}$ 106 is operated with a second matrix of neuron weights $U_{KxM}$ 108, by performing a vector-matrix product between them, which using the previously introduced mathematical notation can be represented by the following expressions:

$$Y = U_{K\times M} \odot \vec{h}_{M\times 1}$$

Which develops the following way:

$$Y = U_{K\times M} \odot \vec{h}_{M\times 1} = \begin{pmatrix} u_{11} \cdot h_1 & \cdots & u_{1M} \cdot h_M \\ \vdots & \ddots & \vdots \\ u_{K1} \cdot h_1 & \cdots & u_{KM} \cdot h_M \end{pmatrix} \quad (\text{A3})$$

Therefore, an intermediate matrix of multiplying components Y is generated by performing a vector-matrix product between the second matrix of neuron weights $U_{KxM}$ 108 (which is the connectivity matrix between hidden layer 105 and the output linear layer 109) and the vector of outputs $\vec{h}$ 106. This means that each component of a row of Y is the component of $U_{KxM}$ at the same row multiplied by the component of the corresponding row of the vector of outputs $\vec{h}$ 106, and all of this for each row of $U_{KxM}$ 108.

In the present example, in the electronic system (as seen in figure 1B), the vector-matrix product between the second matrix of neuron weights $U_{K \times M}$ 108 and the vector of outputs $\vec{h}$ 106 is performed by inputting each component of the vector $\vec{h}$ 106 ($h_1$, $h_2$, etc... to $h_M$) into an array of XNOR logic gates 604.

Furthermore, once the matrix of multiplying components Y is generated, a sum over rows is performed over matrix Y. Such sum over rows (as previously defined in its generic form in equation (6)) can be represented by the following equation:

$$\vec{y}_{K \times 1} = S_r(Y) = S_r\left(U_{K \times M} \odot \vec{h}_{M \times 1}\right) = \begin{pmatrix} u_{11} \cdot h_1 + \cdots + v_{1M} \cdot h_M \\ \vdots \\ u_{K1} \cdot h_1 + \cdots + v_{KM} \cdot h_M \end{pmatrix} \qquad (A4)$$

Therefore, each component of a row of matrix Y is summed over the same row, thus obtaining a K-dimensional vector at the output.

The implementation of these average values over the outputs of the hidden layer provides an additional degree of freedom to the machine-learning process. Furthermore, a training process of the network would select the best averaging for each specific output related to the specific machine-learning task to implement.

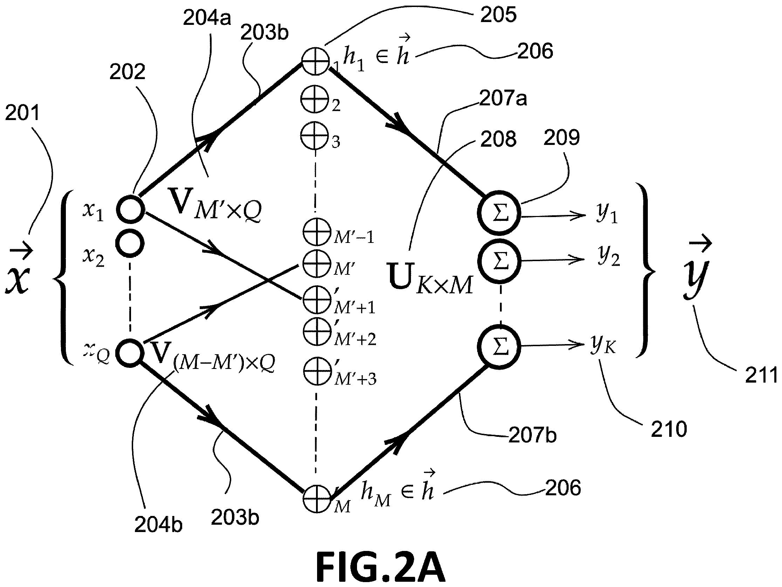

According to a second example of the present disclosure, a method, and an electronic system for inferring a morphological neural network are presented. More precisely, figure 2A shows a schematic representation of a morphological neural network (MNN) according to the second example of the present disclosure, which may be defined as a feedforward network comprising a morphological hidden layer 205, and an output linear layer 209. The MNN network further comprises a first matrix of neuron weights $V_{MxQ}$ associated with the morphological hidden layer 205, and a second matrix of neuron weights 208 $U_{KxM}$ associated with the output linear layer 209.

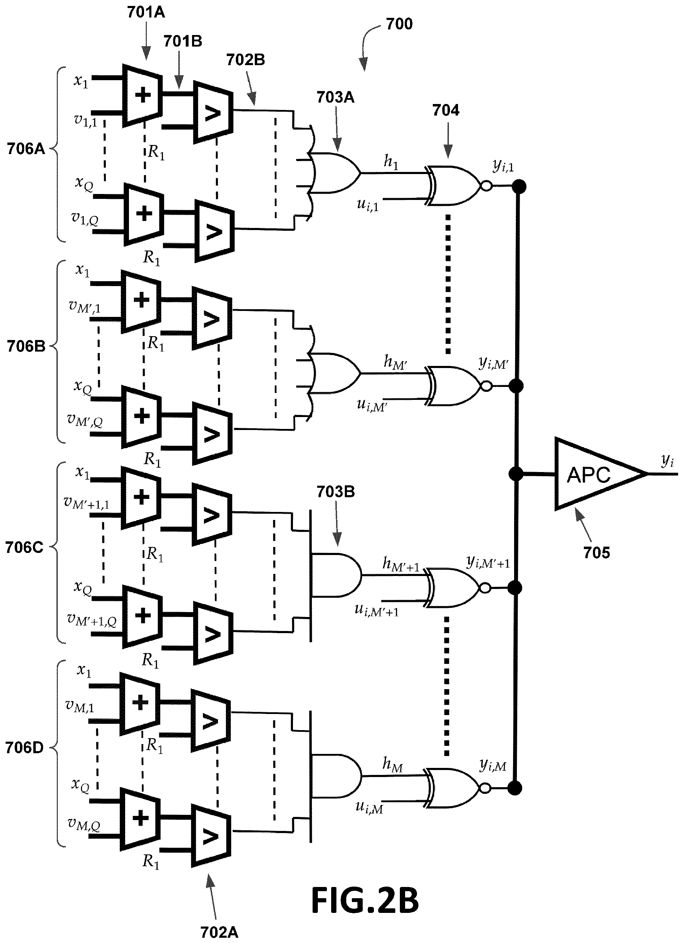

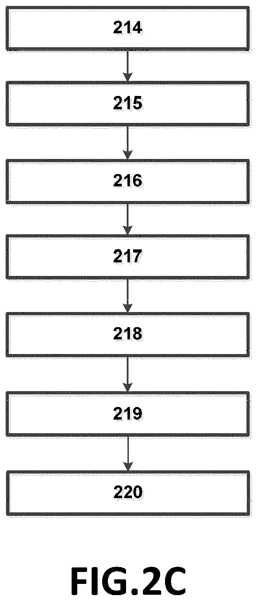

Furthermore, figure 2B shows a schematic representation of the electronic system for inferring a morphological neural network according to the second example of the present disclosure. Also, figure 2C shows a schematic representation of the steps of the method of inferring a morphological neural network according to the second example of the present disclosure.

As seen in figure 2A, the MNN is inferred by introducing an input data vector $\vec{x}$ 201, with a plurality of inputs $x_1$ to $x_Q$ 202 to the MNN network, that generate the vector of outputs $\vec{h}$ 206 of the hidden layer 205 (the vector with components $h_1$ to $h_M$), that is finally converted to the output linear layer 209. In this example, the hidden layer 205 comprises M neurons, and the output layer 209 comprises K neurons, which is the number of classes in which the output of the layer classifies the input data inputted in the MNN network (thus outputting an output vector of the network $\vec{y}$ 211, with components $y_1$ to $y_K$ 210).

In the present example, parameter M may be the number of morphological neurons of the morphological hidden layer 205, and it may usually be selected during the training stage of the network in order to ensure the best fitting for the purpose of the neural network, or the type of input data used thereof. Parameter M' may be set as half of M for simplicity of the present example (so that M=2xM'). This parameter can be selected during the training of the network or during the training by applying a backpropagation algorithm.

The MNN network of figure 2A is inferred by performing the method according to the second example of the present disclosure, as depicted on figure 2C, wherein the method comprises:

- Step 214 of generating two operating sub-matrices 204a and 204b from the first matrix of neuron weights $V_{MxQ}$, each sub-matrix comprising a unique set of weights from the first matrix of neuron weights $V_{MxQ}$;

In this example, two operating sub-matrices $V_{M'xQ}$ 204a and $V_{(M-M')xQ}$ 204b are generated from the first matrix of neuron weights $V_{MxQ}$. Each sub-matrix $V_{M'xQ}$ 204a and $V_{(M-M')xQ}$ 204b comprises a unique set of weights from the first matrix of neuron weights $V_{MxQ}$; and as seen in the graphical representation of figure 2A, first operation sub-matrix 204a comprises the portion of the upper rows of the matrix of neuron weights $V_{MxQ}$ corresponding to to be applied to the neurons 1 to M' of the morphological hidden layer, and second operation sub-matrix 204b comprises the portion of the bottom rows of the matrix of neuron weights $V_{MxQ}$ corresponding to be applied to the neurons M'+1 to M of the morphological hidden layer 205.

Furthermore, the following step is performed:

- Step 215 of generating two matrices of addition components $H_1$ and $H_2$, each associated with a corresponding operating sub-matrix $V_{M'xQ}$ 204a and $V_{(M-M')xQ}$ 204b, and each being the result of performing a vector-matrix addition between the input data vector $\vec{x}$ 201 and the corresponding operating sub-matrices $V_{M'xQ}$ 204a and $V_{(M-M')xQ}$;

In this example, vector $\vec{x}$ 201 is operated with operating sub-matrix $V_{M'xQ}$ 204a, applying a vector-matrix addition between them, resulting in a first matrix of addition components $H_1$ (corresponding to neurons 1 to M' in the morphological hidden layer 205). Furthermore, vector $\vec{x}$ 201 is also operated with operating sub-matrix $V_{(M-M')xQ}$ 204b, applying a vector-matrix addition between them, resulting in a second matrix of addition components $H_2$ (corresponding to neurons M'+1 to M of the morphological hidden layer 205). Both operations are shown in the following expressions:

$$H_1 = V_{M'\times Q} \oplus \vec{x}_{Q\times 1} = \begin{pmatrix} v_{11} + x_1 & \cdots & v_{1Q} + x_Q \\ \vdots & \ddots & \vdots \\ v_{M'1} + x_1 & \cdots & v_{M'Q} + x_Q \end{pmatrix} \qquad (B11)$$

$$H_2 = V_{(M-M')\times Q} \oplus \vec{x}_{Q\times 1} = \begin{pmatrix} v_{(M'+1)1} + x_1 & \cdots & v_{(M'+1)Q} + x_Q \\ \vdots & \ddots & \vdots \\ v_{M1} + x_1 & \cdots & v_{MQ} + x_Q \end{pmatrix} \qquad (B12)$$

$H_1$ and $H_2$ are intermediate matrices wherein the input of the network, as defined by the input data vector $\vec{x}$ 201, is added to both $V_{M'xQ}$ 204a and $V_{(M-M')xQ}$ 204b, that are two portions of the matrix of connectivity between the input layer (i.e., the input data vector $\vec{x}$ 201) and the hidden layer 205. Said addition is a vector-matrix addition (an operation as previously defined), resulting in a matrix $H_1$ of M' rows and Q columns, while matrix $H_2$ is composed of (M-M') rows and Q columns.

Said vector-matrix additions of step 215 are performed using the array of binary digital adders 701A of the electronic system. More precisely, the components ($x_1$ to $x_Q$) of the input data vector $\vec{x}$ 201 and the components of the first operating sub-matrix $V_{M'xQ}$ 204a are inputted in the inputs of the array 701A (in the portion covered by the group of signals 706A to 706B), in order to perform each sum of the matrix as defined in equation (B11). Furthermore, the components of the input data vector $\vec{x}$ 201 and the components of the second operating sub-matrix $V_{(M-M')xQ}$ 204b are inputted in the inputs of the array 701A (in the portion covered by the group of signals 706C to 706D), in order to perform each sum as defined in equation (B12).

Therefore, the outputs 701B of the array 701A comprise each sum, i.e., each component of the resulting matrices of addition components H1 (to generate outputs $h_1$ to $h_{M'}$) and H2 (to generate outputs $H_{M'+1}$ to $h_M$). In order to show where each component of matrix H is obtained within the electronic system, in figure 2B each group of arrays involved in the calculation of each row of matrices $H_1$ and $H_2$ is marked differently. More precisely, 706A for the first row of $H_1$, 706B for the last (the M'th) row of $H_2$, 706C for the first row of $H_2$, and lastly 706D for the last row of $H_2$. The corresponding outputs 701B of the binary digital adders 701A corresponding to 706A, 706B, 706C and 706D correspond to the components of their corresponding row within their corresponding matrix H (first and last row of $H_1$, and first and last row of H2 respectively).

Afterwards, the following step is performed:

- Step 216 of temporally encoding the components of the two matrices of addition components $H_1$ and $H_2$;

Thus, in step 216, each output of the array of binary digital adders 701A is encoded by inputting it to an array of digital comparators 702A, and comparing each output with a counter signal $R_1$ (as seen in figure 2B). In this example, the counter signal $R_1$ is a pseudo random signal which, when compared with each output 701B of the array of binary digital adders 701A, results in an output bit signal 702B of each comparator 702A being the corresponding signal 701B inputted in the comparator 702A. Furthermore, in this example, the pseudo random signal is generated by an LFSR device.

After encoding all the components of both matrices $H_1$ and $H_2$, the following steps are performed:

- Step 217 of, for each matrix of addition components $H_1$ and $H_2$, selecting a maximum and a minimum value among the elements of each respective row, wherein a maximum is selected for the rows of the first matrix of addition components $H_1$, and a minimum is selected for the rows of the second matrix of addition components $H_2$.

- Step 218 of generating two vectors of outputs $\vec{h}_{M' \times 1}$ and $\vec{h}_{(M-M') \times 1}$ of the hidden layer 205, wherein the components of each vector of outputs ($\vec{h}_{M' \times 1}$ and $\vec{h}_{(M-M') \times 1}$) is the respective selected maximum and minimum of the same row of the respective matrix of addition components $H_1$ and $H_2$, as the row of said component within the vector of outputs ($\vec{h}_{M' \times 1}$ and $\vec{h}_{(M-M') \times 1}$); the step further comprising further combining the two generated vectors of outputs ($\vec{h}_{M' \times 1}$ and $\vec{h}_{(M-M') \times 1}$) of the hidden layer 205 into a single vector of outputs $\vec{h}$ 206 of the hidden layer.

Thus, in step 217, the following equation is performed:

$$\vec{h}_{M' \times 1} = M_r(H_1) = M_r(V_{M' \times Q} \oplus x) = \begin{pmatrix} max(v_{11} + x_1, \ldots, v_{1Q} + x_Q) \\ \vdots \\ max(v_{M'1} + x_1, \ldots, v_{M'Q} + x_Q) \end{pmatrix} \quad (B2)$$

$$\vec{h}_{(M-M') \times 1} = m_r(H_2) = \begin{pmatrix} min(v_{(M-M'+1)1} + x_1, \ldots, v_{(M-M'+1)Q} + x_Q) \\ \vdots \\ min(v_{M1} + x_1, \ldots, v_{MQ} + x_Q) \end{pmatrix} \quad (B3)$$

By performing steps 217 and 218, a vector of outputs $\vec{h}$ 206 is obtained, each component of the vector 206 being the output of the corresponding neuron of the morphological hidden layer 205 (i.e., for each neuron i, a corresponding $h_i$ is obtained, for all M morphological neurons). As seen in the previous equations (B2 and B3), and following the previously defined operation of selecting the minimum and maximum component of each row of a specific matrix ($m_r$ and $M_r$), each component of vector $\vec{h}$ 206 is obtained by selecting, in this example, a maximum among the components of each row of the first matrix of addition components $H_1$, and a minimum among the components of each row of the second matrix of addition components $H_2$. Therefore, for row 1 of matrix $H_1$, the maximum value among all the elements of the row is selected, and placed in row 1 of the first vector of outputs $\vec{h}_{M' \times 1}$. This is performed for each row of $H_1$, placing the maximum value of each row of the matrix $H_1$ in the corresponding same row of the first vector of outputs $\vec{h}_{M' \times 1}$, for the first M' components of the vector of outputs $\vec{h}$ 206. Analogously, the same is performed for each row of the second matrix of addition components $H_2$, thus forming the second vector of outputs $\vec{h}_{(M-M') \times 1}$. Thus, combining them in order in correspondence with the neurons of the morphological hidden layer used to generate them, a single vector of outputs $\vec{h}$ 206 of the hidden layer 205 is generated. That is, the elements of the first vector of outputs $\vec{h}_{M' \times 1}$ are the first M' elements of the single vector of outputs $\vec{h}$.206, and the following (M-M') elements of the single vector of outputs $\vec{h}$ 206 are the elements of the second vector of outputs $\vec{h}_{(M-M') \times 1}$.

In the present example, in the electronic system (as seen in figure 2B), the selection of the maximum is performed by inputting the outputs 702B of each digital comparator 702A (which correspond to the signals of the first matrix of addition components $H_1$, that are signals in groups 706A to 706B) in an array of OR logic gates 703A. More specifically, all the outputs 702B corresponding to the same row of matrix $H_1$ (for example, all the outputs 702B within the group of signals 706A, which correspond to the first row of matrix $H_1$, or 706B, corresponding to the last row) are inputted in a single logic OR gate. This way, each OR logic gate of the array 703A outputs the maximum value among the values inputted in the gate. The output of each OR logic gate is the corresponding component $h_i$ (first component for the output of the OR corresponding to the first component of vector $\vec{h}_{M' \times 1}$, second component for the OR corresponding to the second component of vector $\vec{h}_{M' \times 1}$, etc... $h_1$, $h_2$, etc... in figure 2B) of the first vector of outputs $\vec{h}_{M' \times 1}$. In a similar way, the selection of the minimum is performed by inputting the outputs 702B of each digital comparator 702A (which correspond to the signals of the second matrix of addition components $H_2$, that are signals in groups 706C to 706D) in an array of AND logic gates 703B.

Therefore, the vector of outputs $\vec{h}$ 206 is generated by gathering lines $h_1$, $h_2$... to $h_M$, which are the components that form the vector of outputs $\vec{h}$ 206.

Once the outputs ($h_1$, $h_2$, etc...) of the hidden layer 205 of the network are generated, the following steps are performed:

- Step 219 of generating a matrix of multiplying components Y, wherein the components (207a to 207b) of the matrix of multiplying components Y are the result of performing a vector-matrix product between the single vector of outputs $\vec{h}$ 206 and the second matrix of neuron weights $U_{KxM}$ 208, and wherein the vector-matrix product is performed by using an array of XNOR logic gates 704 of the electronic system;
- Step 220 of generating an output data vector $\vec{y}$ 211 for the neural network, wherein each component ($y_1$ to $y_K$ 210) of the output data vector $\vec{y}$ 211 is the sum of the components of each row of the matrix of multiplying components Y, and wherein the sum 209 is performed by using an Accumulated Parallel Counter (APC) 705 of the electronic system. The parallel counter main operation is to add and subtract the number of high and low logic values at its inputs respectively. Inputs composed by a total of M bits (as many components as columns are in the Y matrix). The output result of APC is codified classical in binary (as complement 2 codification, per example).

By performing steps 219 and 220, the vector of outputs $\vec{h}$ 206 is operated with a second matrix of neuron weights $U_{KxM}$ 208, by performing a vector-matrix product between them, which can be represented by the following equation:

$$Y = U_{K \times M} \odot \vec{h}_{M \times 1}$$

Which develops in the following way:

$$Y = U_{K \times M} \odot \vec{h}_{M \times 1} = \begin{pmatrix} u_{11} \cdot h_1 & \cdots & u_{1M} \cdot h_M \\ \vdots & \ddots & \vdots \\ u_{K1} \cdot h_1 & \cdots & u_{KM} \cdot h_M \end{pmatrix} \qquad (B4)$$

Therefore, an intermediate matrix of multiplying components Y is generated by performing a vector-matrix product between the second matrix of neuron weights $U_{KxM}$ 208 (which is the connectivity matrix between hidden layer 205 and the output linear layer 209) and the vector of outputs $\vec{h}$ 206. This means that each component of a row of Y is the component of $U_{KxM}$ 208 of the same row multiplied by the component of the corresponding row of the vector of outputs $\vec{h}$ 206, and all of this for each row of $U_{KxM}$

Furthermore, once the matrix of multiplying components Y is generated, a sum over rows is performed over matrix Y. Such sum over rows (as previously defined in its generic form in equation (6)) can be represented by the following equation:

$$\vec{y}_{K \times 1} = S_r(Y) = S_r(U_{K \times M} \odot \vec{h}_{M \times 1}) = \begin{pmatrix} u_{11} \cdot h_1 + \cdots + v_{1M} \cdot h_M \\ \vdots \\ u_{K1} \cdot h_1 + \cdots + v_{KM} \cdot h_M \end{pmatrix} \qquad (B5)$$

Therefore, each component of a row of matrix Y is added over the same row, thus obtaining the same row component of vector $\vec{y}$.

The implementation of these average values over the outputs of the hidden layer provides an additional degree of freedom to the machine-learning process. Furthermore, a training process of the network would select the best averaging for each specific output related to the specific machine-learning task to implement.

In this example, the APC output is bounded to a specific precision. If the output is codified in two-complement, then the possible output values (codified with N-bits) are bounded between $-2^{N-1}$ and $2^{N-1}+1$. In case the incoming bits to add by APCs are presenting a high (or low) activity (that is, there is a large fraction of logic high (or low) values in the input M-bit signal), the output of the APC saturates to its upper (or lower) allowed bound. This natural saturation of the APC to its upper or lower bounds may be included in the software model used to train a full ANN network as just hard-tanh functions after each neuron of the linear layer. However, the presence of these APC upper and lower bounds implies a restriction for the range of possible values that are inputted to each morphological layer of the present MNN network. This restriction helps to further improve the natural pruning of connections in morphological layers during the application of a back-propagation training algorithm to the MNN network.

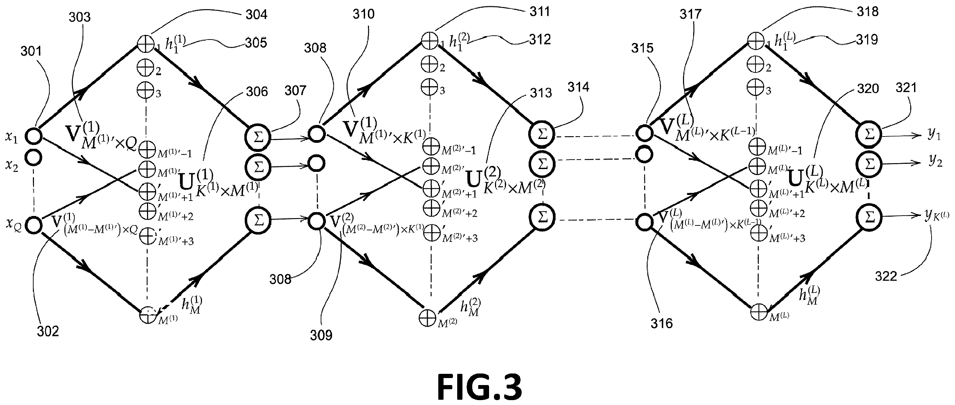

According to a third example of the present disclosure, a method and an electronic system for inferring a morphological neural network are presented. More precisely, figure 3 shows a schematic representation of a morphological neural network that comprises a plurality of morphological hidden layers 304, 311 to 318, and a plurality of output linear layers 307, 314 to 321, each morphological hidden layer comprising a matrix of neuron weights $V^{(1)}{}_{M(1)xQ}$,

$V^{(2)}_{M(2) \times K(1)}$ to $V^{(L)}_{M(L) \times K(L-1)}$, associated with the hidden morphological layer, and each output linear layer comprising a matrix of neuron weights $U^{(1)}_{K(1) \times M(1)}$ 306, $U^{(2)}_{K(2) \times M(2)}$ 313 to $U^{(L)}_{K(L) \times M(L)}$ 320 associated with the output linear layer. In this example, as it can be seen in figure 3, each morphological hidden layer 304, 311 to 318 is connected with a following output linear layer 307, 314 etc... in an alternate way, the last output linear layer 321 being the output linear layer of the network.

More specifically, in this example, each morphological layer 304, 311 to 318 has $M^{(1)}$, $M^{(2)}$, to $M^{(L)}$ morphological neurons respectively, and each output linear layers 307, 314 to 321 has $K^{(1)}$, $K^{(2)}$, $K^{(L)}$ neurons respectively.

The advantages of including a plurality of mixed morphological/linear layers are like those obtained when implementing classical multi-layer ANNs like Convolutional Neural Networks. That is, the first layers are used to detect and emphasize those low-level characteristics of the data (that can be an edge-detection for image processing, or a high-frequency detection in sound processing), while the last layers would be used to further classify and discriminate the information with a high-level of abstraction. For example, in the last layers of the network, the processing information may be answering high-level questions as: is there an animal in my photograph? or has letter 'a' been uttered?.

For reasons of completeness, various aspects of the present disclosure are set out in the following numbered clauses:

Clause 1. Method of inferring of a Morphological Neural Network (MNN), the method being performed by an electronic system, based on inference data including an input data vector, wherein the MNN comprises at least one morphological hidden layer and an output linear layer, a first matrix of neuron weights associated with the morphological hidden layer, and a second matrix of neuron weights associated with the output linear layer, and wherein the method comprises the steps of:

a. Generating a matrix of addition components, wherein the components of the matrix of addition components are the result of performing a vector-matrix addition between the input data vector and the first matrix of neuron weights, and wherein the vector-matrix addition is performed by using an array of binary digital adders of the electronic system;

b. Temporally encoding the components of the matrix of addition components;

c. Selecting, for each row of the temporally encoded matrix of addition components, a maximum or minimum value among the components of the row, wherein:

i. If a maximum value is selected, the selection is performed using a plurality of OR logic gates of the electronic system; and

ii. If a minimum value is selected, the selection is performed using a plurality of AND logic gates of the electronic system;

d. Generating a vector of outputs of the hidden layer, wherein each component of the vector of outputs of the hidden layer is the selected maximum or minimum of the same row of the matrix of addition components as the row of said component within the vector of outputs of the hidden layer;

e. Generating a matrix of multiplying components, wherein the components of the matrix of multiplying components are the result of performing a vector-matrix product between the vector of outputs of the hidden layer and the second matrix of neuron weights, and wherein the vector-matrix product is performed by using an array of multiplying logic gates of the electronic system;

f. Generating an output data vector for the neural network, wherein each component of the output data vector is the sum of the components of each row of the matrix of multiplying components, and wherein the sum is performed by using an accumulated parallel counter of the electronic system.

Clause 2. Method according to clause 1, wherein in step b, the temporal encoding is performed by comparing each component of the matrix of addition components with a counter signal, using an array of digital comparators of the electronic system;

Clause 3. Method according to clause 2, wherein the counter signal is a continuous counter signal.

Clause 4. Method according to clause 2, wherein the counter signal is a random signal.

Clause 5. Method according to any of clauses 1 to 4, wherein the array of multiplying logic gates comprises at least one XNOR logic gate.

Clause 6. Method according to any of clauses 1 to 5, wherein the array of multiplying logic gates comprises at least one AND logic gate.

Clause 7. Method according to any of clauses 1 to 6, wherein step e further comprises temporally encoding the components of the second matrix of neuron weights, the encoding being performed by comparing each component of the second matrix of neuron weights with a second counter signal, using a second digital comparison module of the electronic system.

Clause 8. Method according to clause 7, wherein the first counter signal and the second counter signal are statistically decorrelated.

Clause 9. Method according to clause 7 or 8, wherein the second counter signal is a continuous counter signal or a random signal.

Clause 10. Method according to any of clauses 1 to 9, further comprising generating two operating sub-matrices from the first matrix of neuron weights, each sub-matrix comprising a unique set of weights from the first matrix of neuron weights, and wherein:

○ step a further comprises generating two matrices of addition components, each associated with a corresponding operating sub-matrix, and each being the result of performing a vector-matrix addition between the input data vector and the corresponding operating sub-matrix;
○ step c further comprises, for each generated matrix of addition components, selecting a maximum and a minimum value among the elements of each respective row, wherein a maximum is selected for the rows of the first matrix of addition components, and a minimum is selected for the rows of the second matrix of addition components.
○ step d further comprises generating two vectors of outputs of the hidden layer, wherein the components of each vector of outputs is the respective selected maximum or minimum of the same row of the respective matrix of addition components, as the row of said component within the vector of outputs, and step c further comprises a step of combining the two generated vectors of outputs of the hidden layer into a single vector of outputs of the hidden layer.

Clause 11. Method according to any of clauses 1 to 10, wherein the network comprises a plurality of hidden layers and a plurality of output linear layers, each hidden layer comprising a matrix of neuron weights associated with the hidden morphological layer, and each output linear layer comprising a matrix of neuron weights associated with the output linear layer, wherein each hidden layer is connected with a following output linear layer in an alternate way, the last output linear layer being the output linear layer of the network.

Clause 12. Electronic system for inferring of a Morphological Neural Network (MNN), using inference data including an input data vector, wherein the MNN comprises at least one morphological hidden layer and an output linear layer, a first matrix of neuron weights associated with the morphological hidden layer, and a second matrix of neuron weights associated with the output linear layer, and wherein the system comprises:

- A first array of binary digital adders configured to generate a matrix of addition components, wherein the components of the matrix of addition components are the result of performing a vector-matrix addition between the input data vector and the first matrix of neuron weights.
- A temporal encoder configured to encode the components of the matrix of addition components;
- A selecting module, configured to select, for each row of the matrix of addition components, a maximum or minimum value among the components of the row;
- A vector generating module configured to generate a vector of outputs of the hidden layer, wherein each component of the vector of outputs of the hidden layer is the selected maximum or minimum of the same row of the matrix of addition components as the row of said component within the vector of outputs of the hidden layer;
- An array of multiplying logic gates configured to generate a matrix of multiplying components, wherein the components of the matrix of multiplying components are the result of performing a vector-matrix product between the vector of outputs of the hidden layer and the second matrix of neuron weights;
- An accumulated parallel counter configured to generate an output data vector for the neural network, wherein each component of the output data vector is the sum of the components of each row of the matrix of multiplying components.

Clause 13. Electronic system according to clause 12, wherein the temporal encoder comprises an array of digital comparators configured to temporally encode the components of the matrix of addition components, and wherein the encoding is performed by comparing each component of the matrix of addition components with a counter signal.

Clause 14. Electronic system according to clause 13, further comprising a linear-feedback shift register (LFSR) for generating a random counter signal.

Clause 15. Electronic system according to any of clauses 12 to 14, wherein the selection module comprises a plurality of OR logic gates, to select a maximum value.

Clause 16. Electronic system according to any of clauses 12 to 15, wherein the selection module comprises a plurality of AND logic gates, to select a minimum value.

Clause 17. Electronic system according to any of clauses 12 to 16, wherein the array of multiplying logic gates comprises a plurality of XNOR logic gates.

Clause 18. Electronic system according to any of clauses 12 to 17, wherein the array of multiplying logic gates comprises a plurality of AND logic gates.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. Method of inferring of a Morphological Neural Network (MNN), the method being performed by an electronic system, based on inference data including an input data vector, wherein the MNN comprises at least one morphological hidden layer and an output linear layer, a first matrix of neuron weights associated with the morphological hidden layer, and a second matrix of neuron weights associated with the output linear layer, and wherein the method comprises the steps of:

   a. Generating a matrix of addition components, wherein the components of the matrix of addition components are the result of performing a vector-matrix addition between the input data vector and the first matrix of neuron weights, and wherein the vector-matrix addition is performed by using an array of binary digital adders of the electronic system;
   b. Temporally encoding the components of the matrix of addition components;
   c. Selecting, for each row of the temporally encoded matrix of addition components, a maximum or minimum value among the components of the row, wherein:

      i. If a maximum value is selected, the selection is performed using a plurality of OR logic gates of the electronic system; and
      ii. If a minimum value is selected, the selection is performed using a plurality of AND logic gates of the electronic system;

   d. Generating a vector of outputs of the hidden layer, wherein each component of the vector of outputs of the hidden layer is the selected maximum or minimum of the same row of the matrix of addition components as the row of said component within the vector of outputs of the hidden layer;
   e. Generating a matrix of multiplying components, wherein the components of the matrix of multiplying components are the result of performing a vector-matrix product between the vector of outputs of the hidden layer and the second matrix of neuron weights, and wherein the vector-matrix product is performed by using an array of multiplying logic gates of the electronic system;
   f. Generating an output data vector for the neural network, wherein each component of the output data vector is the sum of the components of each row of the matrix of multiplying components, and wherein the sum is performed by using an accumulated parallel counter of the electronic system.

2. Method according to claim 1, wherein in step b, the temporal encoding is performed by comparing each component of the matrix of addition components with a counter signal, using an array of digital comparators of the electronic system;

3. Method according to claim 2, wherein the counter signal is a continuous counter signal.

4. Method according to claim 2, wherein the counter signal is a random signal.

5. Method according to any of claims 1 to 4, wherein the array of multiplying logic gates comprises at least one XNOR logic gate.

6. Method according to any of claims 1 to 5, wherein the array of multiplying logic gates comprises at least one AND logic gate.

7. Method according to any of claims 1 to 6, wherein step e further comprises temporally encoding the components of the second matrix of neuron weights, the encoding being performed by comparing each component of the second matrix of neuron weights with a second counter signal, using a second digital comparison module of the electronic system.

8. Method according to claim 7, wherein the first counter signal and the second counter signal are statistically decorrelated.

9. Method according to claim 7 or 8, wherein the second counter signal is a continuous counter signal or a random signal.

10. Method according to any of claims 1 to 9, further comprising generating two operating sub-matrices from the first matrix of neuron weights, each sub-matrix comprising a unique set of weights from the first matrix of neuron weights, and wherein:

   ◦ step a further comprises generating two matrices of addition components, each associated with a corresponding operating sub-matrix, and each being the result of performing a vector-matrix addition between the input data vector and the corresponding operating sub-matrix;
   ◦ step c further comprises, for each generated matrix of addition components, selecting a maximum and a minimum value among the elements of each respective row, wherein a maximum is selected for the rows of the first matrix of addition components, and a minimum is selected for the rows of the second matrix of addition components.
   ◦ step d further comprises generating two vectors of outputs of the hidden layer, wherein the components of each vector of outputs is the respective selected maximum or minimum of the same row of the respective matrix of addition components, as the row of said component within the vector of outputs, and step c further comprises a step of combining the two generated vectors of outputs of the hidden layer into a single vector of outputs of the hidden layer.

11. Method according to any of claims 1 to 10, wherein the network comprises a plurality of hidden layers and a plurality of output linear layers, each hidden layer comprising a matrix of neuron weights associated with the hidden morphological layer, and each output linear layer comprising a matrix of neuron weights associated with the output linear layer, wherein each hidden layer is connected with a following output linear layer in an alternate way, the last output linear layer being the output linear layer of the network.

12. Electronic system for inferring of a Morphological Neural Network (MNN), using inference data including an input data vector, wherein the MNN comprises at least one morphological hidden layer and an output linear layer, a first matrix of neuron weights associated with the morphological hidden layer, and a second matrix of neuron weights associated with the output linear layer, and wherein the system comprises:

   • A first array of binary digital adders configured to generate a matrix of addition components, wherein the components of the matrix of addition components are the result of performing a vector-matrix addition between the input data vector and the first matrix of neuron weights.

• A temporal encoder configured to encode the components of the matrix of addition components;

• A selecting module, configured to select, for each row of the matrix of addition components, a maximum or minimum value among the components of the row;

• A vector generating module configured to generate a vector of outputs of the hidden layer, wherein each component of the vector of outputs of the hidden layer is the selected maximum or minimum of the same row of the matrix of addition components as the row of said component within the vector of outputs of the hidden layer;

• An array of multiplying logic gates configured to generate a matrix of multiplying components, wherein the components of the matrix of multiplying components are the result of performing a vector-matrix product between the vector of outputs of the hidden layer and the second matrix of neuron weights;

• An accumulated parallel counter configured to generate an output data vector for the neural network, wherein each component of the output data vector is the sum of the components of each row of the matrix of multiplying components.

13. Electronic system according to claim 12, wherein the temporal encoder comprises an array of digital comparators configured to temporally encode the components of the matrix of addition components, and wherein the encoding is performed by comparing each component of the matrix of addition components with a counter signal.

14. Electronic system according to claim 13, further comprising a linear-feedback shift register (LFSR) for generating a random counter signal.

**FIG.1A**

**FIG.1B**

FIG.1C

**FIG.2A**

**FIG.2B**

```
┌─────────────────────────────┐
│             214             │
└─────────────────────────────┘
               │
               ▼
┌─────────────────────────────┐
│             215             │
└─────────────────────────────┘
               │
               ▼
┌─────────────────────────────┐
│             216             │
└─────────────────────────────┘
               │
               ▼
┌─────────────────────────────┐
│             217             │
└─────────────────────────────┘
               │
               ▼
┌─────────────────────────────┐
│             218             │
└─────────────────────────────┘
               │
               ▼
┌─────────────────────────────┐
│             219             │
└─────────────────────────────┘
               │
               ▼
┌─────────────────────────────┐
│             220             │
└─────────────────────────────┘
```

# FIG.2C

**FIG.3**

Europäisches Patentamt
European Patent Office
Office européen des brevets

# EUROPEAN SEARCH REPORT

**Application Number**

EP 22 38 2198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HERNÁNDEZ GERARDO ET AL: "Hybrid neural networks for big data classification", NEUROCOMPUTING, vol. 390, 1 May 2020 (2020-05-01), pages 327-340, XP055956890, AMSTERDAM, NL ISSN: 0925-2312, DOI: 10.1016/j.neucom.2019.08.095 * figure 1 * * sections 1-5 * | 1-14 | INV. G06N3/063 G06N3/04 ADD. G06N3/08 |
| A | FRASSER CHRISTIAM F ET AL: "Exploiting Correlation in Stochastic Computing based Deep Neural Networks", 2021 XXXVI CONFERENCE ON DESIGN OF CIRCUITS AND INTEGRATED SYSTEMS (DCIS), IEEE, 24 November 2021 (2021-11-24), pages 1-6, XP033999884, DOI: 10.1109/DCIS53048.2021.9666159 [retrieved on 2021-12-29] * figures 1-6 * * sections I-III * | 1-14 | |
| A | Prado Fabio Galán: "DEVELOPMENT OF NEUROMORPHIC HARDWARE AND NON-ITERATIVE LEARNING DESIGNS FOR EDGE COMPUTING APPLICATIONS", , 13 May 2021 (2021-05-13), pages 1-113, XP055956750, Retrieved from the Internet: URL:https://dspace.uib.es/xmlui/bitstream/handle/11201/155448/Galan_Prado_Fabio.pdf?sequence=1&isAllowed=y [retrieved on 2022-08-31] * chapter 3 * | 1-14 | |

|  |  |
|---|---|
| | TECHNICAL FIELDS SEARCHED (IPC) |
| | G06N |

The present search report has been drawn up for all claims

| Place of search | Date of completion of the search | Examiner |
|---|---|---|
| The Hague | 1 September 2022 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)